# EUROPÄISCHE PATENTSCHRIFT

(11) **EP 1 690 879 B1**
(45) Veröffentlichungstag und Bekanntmachung des Hinweises auf die Patenterteilung: **20.08.2008**
(21) Anmeldenummer: 06111958.2
(22) Anmeldetag: 23.03.2000
(51) Int. Cl.: C08F 297/04

(54) **Glasklares, schlagzähes Polystyrol auf Basis von Styrol-Butadien-Blockcopolymeren**
transparent, impact-resistant polystyrene on a styrene-butadiene block copolymer basis
polystyrène transparent et résistant au chocs a base de copolymères blocs styrène-butadiene

(30) Priorität: 27.03.1999 DE 19914075; 23.12.1999 US 471288
(43) Veröffentlichungstag der Anmeldung: 16.08.2006
(62) Teilanmeldung aus: 00912636.8
(73) Patentinhaber: BASF SE, 67056 Ludwigshafen (DE)
(72) Erfinder: Knoll, Konrad, 68199, Mannheim (DE); Fischer, Wolfgang, 69190, Walldorf (DE); Gausepohl, Hermann, 67112, Mutterstadt (DE); Koch, Jürgen, 67141, Neuhofen (DE); Wünsch, Josef Richard, 67105, Schifferstadt (DE); Naegele, Paul, 67166, Otterstadt (DE)

(56) Entgegenhaltungen:
- EP-A- 0 842 962
- DE-A- 19 615 533
- DE-A- 19 715 035
- GB-A- 1 556 234
- US-A- 3 632 682
- US-A- 4 603 155

## Beschreibung

Die Erfindung betrifft sternförmige Blockcopolymere, enthaltend mindestens zwei außenliegende Hartblöcke S₁ und S₂ aus vinylaromatischen Monomeren, mindestens einen dazwischenliegenden, statistischen Weichblock B/S aus vinylaromatischen Monomeren und Dienen und einen zusätzlichen inneren Hartblock S₃ aus vinylaromatischen Monomeren, wobei der Anteil der Hartblöcke über 40 Gew.-%, bezogen auf das gesamte Blockcopolymer, beträgt und das Molekulargewicht von S₃ im Bereich von 500 bis 5000 g/mol liegt.
Des weiteren betrifft die Erfindung ein Verfahren zur Herstellung der Blockcopolymeren sowie deren Verwendung.
Die US 4 939 208 beschreibt lineare, transparente Styrol-Butadien-Blockcopolymere der Struktur S₁-B₁-B/S-S₂. Die Polymerisation von Styrol und Butadien in Gegenwart einer Lewis-Base, insbesondere Tetrahydrofuran (Randomizer), führt zu dem statistischen Copolymerblock B/S. Die Länge des B/S-Segments hängt von der Menge an Lewis-Base ab.

Polymodale gekoppelte Styrol-Butadien-Blockcopolymere werden in der EP-A 0 654 488 beschrieben. Die Blöcke B/S enthalten einen Styrolgradienten (Tapered-Block). Durch Zusatz von polaren Verbindungen, wie Tetrahydrofuran als Randomizer kann der statistische Anteil in den Blöcken erhöht werden.

Die Polymerisation von Styrol und Butadien in Gegenwart von geringen Mengen Tetrahydrofuran als Randomizer führt zu einem hohen Anteil an Homo-Polybutadienblöcken und einem verschmierten Übergang zum Polystyrolblock. Erhöht man die Tetrahydrofuranmenge, so gelangt man zwar zu mehr oder weniger statistischen Butadien-Styrol-Copolymerblöcken, allerdings wird hierbei gleichzeitig der relative Anteil an 1,2-Verknüpfungen des Polydiens (1,2-Vinylgehalt) stark erhöht. Der hohe 1,2-Vinylgehalt beeinträchtigt aber die Thermostabilität des entsprechenden Blockcopolymeren und erhöht die Glasübergangstemperatur.

Die DE-A 19615533 beschreibt ein elastomeres Styrol-Butadien-Blockcopolymer mit einem relativen Anteil an 1,2-Verknüpfungen des Polydiens unterhalb von 15 % und einem Anteil der Hartphase von 1 bis 40 Vol.-%. Die Polymerisation der Weichphase wird in Gegenwart eines löslichen Kaliumsalzes vorgenommen.

Die Verwendung von Kaliumalkoholaten oder Kaliumhydroxid und lithiumorganischen Polymerisationsinitiatoren wird in US 3,767,632, US 3,872,177, US 3,944,528 und von C.W. Wolfford et al. in J. Polym. Sci, Part. A-1, Vol. 7 (1969), S. 461-469, beschrieben.

Die statistische Copolymerisation von Styrol und Butadien im Cyclohexan in Gegenwart von löslichen Kaliumsalzen wird von S.D. Smith, A. Ashraf in Polymer Preprints 34 (2), 672 (1993) und 35 (2), 466 (1994) beschrieben. Als lösliche Kaliumsalze werden Kalium-2,3-dimethyl-3-pentanolat und Kalium-3-ethyl-3-pentanolat erwähnt.

Aufgabe der vorliegenden Erfindung war es daher, ein glasklares, schlagzähes Polystyrol mit einem ausgewogenen Zäh-/Steifigkeits-Verhältnis bereitzustellen, das die vorgenannten Nachteile nicht aufweist. Insbesondere sollte das schlagzähe Polystyrol eine hohe intrinsische thermische Stabilität und reduzierte Tixotropie aufweisen. Die Verträglichkeit mit Styrolpolymeren sollte ebenfalls gegeben sein, um transparente Mischungen zu erhalten. Die Effizienz zur Schlagzähmodifizierung von Styrolpolymeren, insbesondere Standardpolystyrol, sollte erhöht werden.

Demgemäß wurden die oben beschriebenen Blockcopolymeren gefunden. In bevorzugten Blockcopolymeren liegt der 1,2-Vinylgehalt im Weichblock B/S unter 20 %.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Bevorzugt liegt der 1,2-Vinylgehalt der Weichblöcke im Bereich von 10 - 20 %, insbesondere 12 - 16 %.

Als vinylaromatische Monomere können sowohl für die Hartblöcke S₁ und S₂ als auch für die Weichblöcke B/S Styrol, a-Methylstyrol, p-Methylstyrol, Ethylstyrol, tert.-Butylstyrol, Vinyltoluol oder Mischungen davon verwendet werden. Bevorzugt wird Styrol verwendet.

Als Diene für den Weichblock B/S werden bevorzugt Butadien, Isopren, 2,3-Dimethylbutadien, 1,3-Pentadien, 1,3-Hexadiene oder Piperylen oder Mischungen davon verwendet. Besonders bevorzugt wird 1,3-Butadien verwendet.

Bevorzugt besteht das Blockcopolymere ausschließlich aus Hartblöcken S sowie mindestens einem statistischen Weichblock B/S und enthält keine Homopolydienblöcke B. Bevorzugte Blockcopolymere enthalten außenliegende Hartblöcke S₁ und S₂ mit unterschiedlicher Blocklänge. Das Molekulargewicht von S₁ liegt bevorzugt im Bereich von 5000 bis 30000 g/mol, insbesondere im Bereich von 10000 bis 20000 g/mol. Das Molekulargewicht von S₂ beträgt bevorzugt über 35000 g/mol. Bevorzugte Molekulargewichte von S₂ liegen im Bereich von 50000 bis 150000 g/mol.

Zwischen den Hartblöcken S₁ und S₂ können sich auch mehrere, statistische Weichblöcke B/S befinden. Bevorzugt werden mindestens 2 statistische Weichblöcke (B/S)₁ und (B/S)₂ mit unterschiedlichen Anteilen an vinylaromatischen Monomeren und damit unterschiedlichen Glasübergangstemperaturen.

Die Blockcopolymeren weisen eine sternförmige Struktur auf.

Bevorzugt werden sternförmige Blockcopolymere mit einer Struktur aus mindestens einem Sternast der Blockfolge S₁-(B/S)-S₃ und mindestens einem Sternast der Blockfolge S₂-(B/S)-S₃. S₃ steht hierbei für einen weiteren Hartblock aus den genannten vinylaromatischen Monomeren.

Besonders bevorzugt werden sternförmige Blockcopolymere mit Strukturen, die mindestens einen Sternast mit der Blockfolge S₁-(B/S)₁-(B/S)₂-S₃ und mindestens einen Sternast mit der Blockfolge S₂-(B/S)₁-(B/S)₂-S₃ aufweisen. Das molare Verhältnis von vinylaromatischem Monomer zu Dien S/B liegt im äußeren Block (B/S)₁ bevorzugt im Bereich von 0,5 bis 2 und im inneren Block (B/S)₂ bevorzugt unterhalb 0,5. Durch den höheren Gehalt an vinylaromatischen Monomeren im äußeren statistischen Block (B/S)₁ wird das Blockcopolymer bei unverändertem Gesamtbutadiengehalt duktiler, was sich insbesondere in Abmischungen mit Standard-Polystyrol vorteilhaft erweist.

Die sternförmigen Blockcopolymeren mit dem zusätzlichen, inneren Block S₃ haben bei vergleichbarer Duktilität eine höhere Steifigkeit. Der Block S₃ wirkt somit wie ein Füllstoff in der Weichphase, ohne das Verhältnis von Hartphase zu Weichphase zu verändern. Das Molekulargewicht der Blöcke S₃ ist wesentlich niedriger als das der Blöcke S₁ und S₂ und liegt im Bereich von 500 bis 5000 g/mol.

Die erfindungsgemäßen Blockcopolymere können beispielsweise durch sequentielle anionische Polymerisation gebildet werden, wobei mindestens die Polymerisation der Weichblöcke (B/S) in Gegenwart eines Randomizers erfolgt. Die Gegenwart von Randomizern bewirkt die statistische Verteilung der Diene und vinylaromatischen Einheiten im Weichblock (B/S). Als Randomizer eignen sich Donorlösungsmittel, wie Ether, beispielsweise Tetrahydrofuran, oder tert.-Amine oder lösliche Kaliumsalze. Für eine ideale statistische Verteilung werden im Falle von Tetrahydrofuran Mengen von in der Regel über 0,25 Volumenprozent, bezogen auf das Lösungsmittel, verwendet. Bei geringen Konzentrationen erhält man sogenannte "tapered" Blöcke mit einem Gradienten in der Zusammensetzung der Comonomeren.

Bei den angegebenen höheren Mengen an Tetrahydrofuran erhöht sich gleichzeitig der relative Anteil der 1,2-Verknüpfungen der Dieneinheiten auf etwa 30 bis 35 %.
Bei Verwendung von Kaliumsalzen erhöht sich der 1,2-Vinylgehalt in den Weichblöcken dagegen nur unwesentlich. Die erhaltenen Blockcopolymeren sind daher weniger vernetzungsanfällig und weisen bei gleichem Butadiengehalt eine niedrigere Glasübergangstemperatur auf.

Das Kaliumsalz wird im allgemeinen in Bezug auf den anionischen Polymerisationsinitiator im molaren Unterschuss eingesetzt. Bevorzugt wählt man ein molares Verhältnis von anionischem Polymerisationsinitiator zu Kaliumsalz im Bereich von 10:1 bis 100:1, besonders bevorzugt im Bereich von 30:1 bis 70:1. Das verwendete Kaliumsalz sollte im allgemeinen in Reaktionsmedium löslich sein. Geeignete Kaliumsalze sind beispielsweise Kaliumalkoholate, insbesondere ein Kaliumalkoholat eines tertiären Alkohols mit mindestens 5 Kohlenstoffatomen. Besonders bevorzugt werden Kalium-2,2-dimethyl-1-propanolat, Kalium-2-methyl-butanolat (Kaliumtertiäramylat), Kalium-2,3-dimethyl-3-pentanolat, Kalium-2-methyl-hexanolat, Kalium-3,7-dimethyl-3-octanolat (Kaliumtetrahydrolinaloolat) oder Kalium-3-ethyl-3-pentanolat eingesetzt. Die Kaliumalkoholate sind beispielsweise durch Umsetzung von elementarem Kalium, Kalium/Natrium-Legierung oder Kaliumalkylaten und den entsprechenden Alkoholen in inertem Lösungsmittel zugänglich.

Zweckmäßigerweise gibt man das Kaliumsalz erst nach der Zugabe des anionischen Polymerisationsinitiators der Reaktionsmischung zu. Auf diese Weise kann eine Hydrolyse des Kaliumsalzes durch Spuren an protischen Verunreinigungen vermieden werden. Besonders bevorzugt wird das Kaliumsalz kurz vor der Polymerisation des statistischen Weichblockes B/S zugegeben.

Als anionischer Polymerisationsinitiator können die üblichen mono-, bi- oder multifunktionellen Alkalimetallalkyle, -aryle oder -aralkyle verwendet werden. Zweckmäßigerweise werden lithiumorganische Verbindungen eingesetzt wie Ethyl-, Propyl-, Isopropyl-, n-Butyl-, sek.-Butyl-, tert.-Butyl-, Phenyl-, Diphenylhexyl-, Hexamethyldi-, Butadienyl-, Isoprenyl-, Polystyryllithium, 1,4-Dilithiobutan, 1,4-Dilithio-2-buten oder 1,4-Dilithiobenzol. Die benötigte Menge an Polymerisationsinitiator richtet sich nach dem gewünschten Molekulargewicht. In der Regel liegt sie im Bereich von 0,001 bis 5 mol-%, bezogen auf die Gesamtmonomermenge.

Bei der Herstellung der unsymmetrischen, sternförmigen Blockcopolymeren wird mindestens zweimal ein Polymerisationsinitiator zugegeben. Bevorzugt wird gleichzeitig das vinylaromatische Monomer Sₐ und der Initiator I₁ im Reaktor zugegeben und vollständig polymerisiert und anschließend nochmals gleichzeitig vinylaromatische Monomer S_{b} und Initiator I₂. Auf diese Weise erhält man nebeneinander zwei "lebende" Polymerketten Sₐ-S_{b}-I₁ und S_{b}-I₂, an die anschließend durch gemeinsame Zugabe von vinylaromatischem Monomer und Diene der Block (B/S)₁ und gegebenenfalls durch erneute gemeinsame Zugabe von vinylaromatischem Monomer und Diene der Block (B/S)₂ sowie durch weitere Zugabe von vinylaromatischem Monomer S_{c} der Block S₃ polymerisiert. Das Verhältnis von Initiator I₁ zu Initiator I₂ bestimmt den relativen Anteil der jeweiligen Sternäste, die sich nach der Kopplung statistisch verteilt in den einzelnen sternförmigen Blockcopolymeren finden. Der Block S₁ wird hierbei aus den Dosierungen der vinylaromatischen Monomeren Sₐ und S_{b} gebildet, der Block S₂ und S₃ alleine durch die Dosierung S_{b} bzw. S_{c}. Das molare Initiatorverhältnis I_{2/}I₁ liegt bevorzugt im Bereich von 4/1 bis 1/1, besonders bevorzugt im Bereich von 3,5/1 bis 1,5/1.

Die Polymerisation kann in Gegenwart eines Lösungsmittels vorgenommen werden. Als Lösungsmittel eignen sich die für anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Octan, Benzol, Alkylbenzole, wie Toluol, Xylol, Ethylbenzol oder Decalin oder geeignete Gemische. Bevorzugt werden Cyclohexan und Methylcyclohexan verwendet.

In Gegenwart von retardierend auf die Polymerisationsgeschwindigkeit wirkenden Metallorganylen, wie Magnesium-, Aluminium- oder Zinkalkylen, kann die Polymerisation auch lösungsmittelfrei durchgeführt werden.

Nach Beendigung der Polymerisation werden die lebenden Polymerketten durch mehrfunktionelle Kopplungsmittel, wie polyfunktionelle Aldehyde, Ketone, Ester, Anhydride oder Epoxide sternförmig verknüpft. Hierbei können durch Kopplung gleicher oder verschiedener Blöcke symmetrische und unsymmetrische Sternblockcopolymere erhalten werden, deren Arme die oben genannten Blockstrukturen aufweisen können. Unsymmetrische Sternblockcopolymere sind beispielsweise durch getrennte Herstellung der einzelnen Sternäste bzw. durch mehrfache Initiierung, beispielsweise zweifache Initiierung mit Aufteilung des Initiators im Verhältnis 2/1 bis 10/1, zugänglich.

Die erfindungsgemäßen Blockcopolymeren zeigen das Verhalten von glasklarem, schlagzähem Polystyrol mit einem ausgewogenen Zäh-/Steifigkeitsverhältnis. Aufgrund des statistischen Weichblockes B/S sind die erfindungsgemäßen Blockcopolymeren bei gleichem Diengehalt thermostabiler und duktiler als entsprechende Blockcopolymere mit einem "tapered" B/S-Block. Eine besonders hohe intrinsische thermische Stabilität weisen die in Gegenwart eines Kaliumsalzes hergestellten Blockcopolymeren mit niedrigem 1,2-Vinylgehalt auf.mit geringem 1,2-Vinylgehalt weisen die erfindungsgemäßen Blockcopolymere eine hohe intrinsische thermische Stabilität auf.

Die erfindungsgemäßen Blockcopolymeren weisen auch eine gute Verträglichkeit mit weiteren Styrolpolymeren auf und können daher zu transparenten Polymermischungen verarbeitet werden. Die erfindungsgemäßen Blockcopolymeren oder Polymermischungen können zur Herstellung von Fasern, Folien und Formkörpern verwendet werden.

### Beispiele

### Messmethoden

Die Schmelze-Volumenrate MVR (200°C/5 kg) wurde gemäß ISO 1133 bestimmt.

Die Probekörper für die mechanischen Prüfungen wurden bei 220°C Massetemperatur und 45°C Formtemperatur gespritzt. E-Modul, Streckspannung, Bruchspannung, Streckdehnung und Bruchdehnung wurden im Zugversuch nach ISO 527 mit Zugstäben gemäß ISO 3167 ermittelt.

Die Vicat-Erweichungstemperaturen VST/A und VST/B wurden nach der Prüfvorschrift DIN ISO 306 bestimmt.

Die Molekulargewichte wurden mittels Gelpermeationschromatographie (GPC) an Polystyrol-Gel-Säulen vom Typ Mixed B der Fa. Polymer Labs. mit monodispersen Polystyrolstandards bei Raumtemperatur und Tetrahydrofuran als Eluens bestimmt.

Der 1,2-Vinylgehalt wurde mittels FT-IR-Spektroskopie ermittelt.

Beispiel 1 und Vergleichsversuch V1 und V2

Sternförmige Styrol-Butadien-Blockcopolymere der Strukturen I und II wurden durch sequentielle anionische Polymerisation von Styrol und Butadien in Cylohexan als Lösungsmittel bei 60 bis 90°C und anschließender Kopplung mit epoxidiertem Leinsamenöl (Edenol B 316 der Fa. Henkel) erhalten.

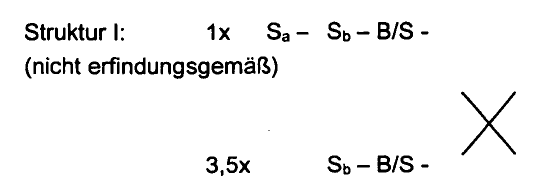

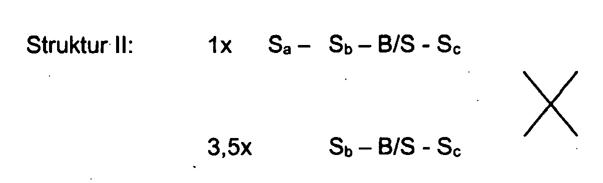

Der in der Beschreibung als S₁ bezeichnete Block entspricht S_{b}, S₂ wird aus Sₐ - S_{b} gebildet und S₃ entspricht S_{c}.

### X steht für den Rest des Kopplungsmittels

Hierzu wurde in einem 10-I-Rührreaktor mit sec.-Butyllithium austitriertes Cyclohexan und sec.-Butyllithium vorgelegt und die zur Herstellung des Blocks Sₐ benötigte Menge Styrol (Styrol I) zudosiert. Anschließend wurde erneut mit sec.-Butyllithium (sec.-BuLi II) initiiert und die entsprechende Menge Styrol (Styrol II) für die Blöcke S_{b} zudosiert. Nachdem alles Styrol verbraucht worden war, wurde Kaliumtetrahydrolinaloolat (Li:K = 20:1) als Randomizer zugegeben und die Blöcke (B/S) durch Zugabe einer Mischungen aus Styrol (Styrol 111) und Butadien angefügt. Im Falle der Struktur 11 wurde ein weiterer Styrolblock S_{c} (Styrol IV) anpolymerisiert. Anschließend wurden die erhaltenen Blockcopolymere mit Edenol B 316 gekoppelt. Die Dosierung der Einsatzstoffe ist in Tabelle 1 und die Zusammensetzung der Blöcke und physikalische und mechanische Eigenschaften der Blockcopolymeren sind in Tabelle 2 zusammengestellt.

**Tabelle 1: Dosierung der Einsatzstoffe für die Beispiele 1, V1 und V2**

| | Block | V1 | V2 | Beispiel 1 |
|---|---|---|---|---|
| Cyclohexan | | 3733 g | 3733 g | 3733 g |
| sec BuLi I (1,55 m) | | 5,1 ml | 5,1 ml | 4,66 ml |
| Styrol I | Sₐ | 635,2 g | 635,2 g | 616,3 g |
| sec BuLi II (1,55 m) | S_{b} | 17,93 ml | 17,93 ml | 16,37 ml |
| Styrol 11 | S_{b} | 420,8 g | 420,8 g | 371,4 g |
| K-THL (0,358 m in Cyclohexan) | | 5,42 ml | 5,42 ml | 4,97 ml |
| Butadien | B/S | 362,7 g | 272 g | 273,9 g |
| Styrol III | B/S | 181.3 g | 272 g | 137 g |
| Styrol IV | S_{c} | | | 205,3 g |
| Edenol | | 5,58 ml | 5,58 ml | 5,10 ml |

**Tabelle 2: Physikalische und mechanische Eigenschaften der sternförmigen Styrol-Butadien-Blockcopolymeren**

| Beispiel | V1 | V2 | 1 |
|---|---|---|---|
| Struktur | I | I | II |
| M(Sa) | 80000 | 80000 | 87600 |
| M(S_{b}) | 11 852 | 11 777 | 11 740 |
| M(B/S) | 12698 | 15 225. | 13 000 |
| M(Sc) | - | - | 6 490 |
| Massenverhältnis Styrol : Butadien im Block (B/S) | 1 : 2 | 1 : 1 | 1 : 2 |
| Anteil Butadien in Gew.% bezogen auf Gesamtpolymer | 20 | 17 | 17,1 |
| Anteil Weichblock (B/S) in Gew.-% bezogen auf Gesamtpolymer | 30 | 34 | 25,65 |
| 1,2-Vinylgehalt (%) FT-IR | 15,9 | 19,5 | 7,2 |
| Tg (°C, DSC) | -54 | -22 | -66 |
| MVI (200°C/5kg) | 9,7 | 11,2 | 5,3 |
| Vicat-Temperatur A (°C) | 83,0 | 79,6 | 83,5 |
| Shore-Härte A / D (°C) | | | 96,9 / 71,6 |
| E-Modul (MPa) | 399 | 729 | 1294 |
| Streckspannung (MPa) | 15,8 | 22,3 | 25,6 |
| Reißspannung (MPa) | 27,2 | 33,1 | 23,2 |
| Reißdehnung (%) | 304 | 300 | 297 |

### Beispiele 2 bis 7 und Vergleichsversuche V3 und V4

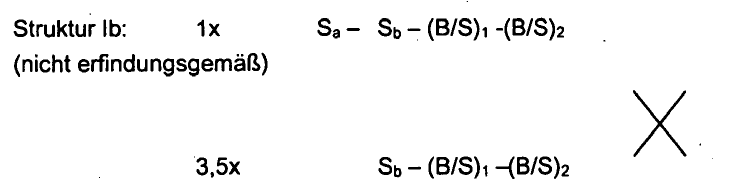

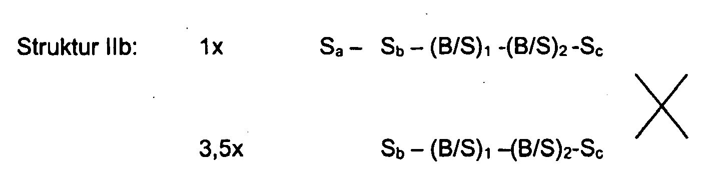

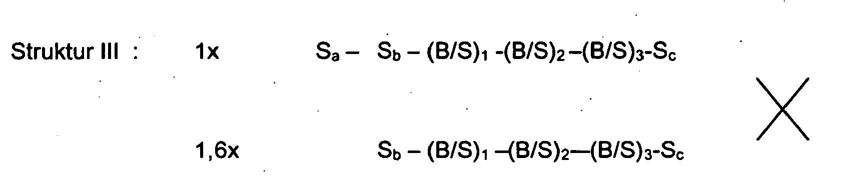

Der in der Beschreibung als S₁ bezeichnete Block entspricht S_{b}, S₂ wir aus Sₐ und S_{b} gebildet und S₃ entspricht S_{c}.

Analog Beispiel 1 wurden sternförmige Styrol-Butadien-Blockcopolymere der Strukturen I, Ib, IIb und III durch sequentielle anionische Polymerisation von Styrol und Butadien mit den in Tabelle 3 angegebenen Mengen und Dosierabfolge erhalten. Die erhaltenen Blockcopolymere wurden anschließend mit Edenol B 316 (tetrafunktionell) bzw. Diethylcarbonat (trifunktionell) gekoppelt. Die physikalischen und mechanischen Eigenschaften sind in Tabelle 4 zusammengestellt.

### Beispiele 8 bis 13 und Vergleichsversuche V5 und V6

Die Blockcopolymeren der Beispiele 8 bis 13 und V5, V6 wurden jeweils mit Standard-polystyrol (PS 158K der BASF) im Gewichtsverhältnis 30/70 (Blockcopolymer/PS) gemischt.

**Tabelle 3 Mengen und Reihenfolge der Dosierungen der Beispiele 2 bis 7 und V3, V4**

| | | | Beispiel | | | | | | | |
|---|---|---|---|---|---|---|---|---|---|---|
| | Block | Einheit | V3 | V4 | 2 | 3 | 4 | 5 | 6 | 7 |
| Cyclohexan | | l | 643 | 643 | 643 | 643 | 643 | 643 | 643 | 643 |
| Styrol l | Sₐ | kg | 76,2 | 76,2 | 76,2 | 57,2 | 45,8 | 76,2 | 54,2 | 54,2 |
| sec-Buli I 1.35 m | | l | 0,788 | 0,788 | 0,788 | 0,788 | 0,788 | 1,050 | 0,900 | 0,900 |
| K-THL (3%) | | l | 1,057 | 1,057 | 1,057 | 1,057 | 1,057 | 1,096 | 0,698 | 0,442 |
| sec-Buli II 1.35m | | l | 2,757 | 2,757 | 2,757 | 2,757 | 2,757 | 2,625 | 1,440 | 1,440 |
| Styrol II | S_{b} | kg | 46,3 | 32,4 . | 32,4 | 51,4 | 62,9 | 32,4 | 40,4 | 40,4 |
| Butadien I | (B/S)₁ | kg | 52,0 | 10,0 | 10 | 10 | 10 | 10 | 18,0 | 18,0 |
| Styrol III | (B/S)₁ | kg | 25,4 | 13,9 | 13,9 | 13,9 | 13,9 | 13,9 | 17,1 | 17,1 |
| Butadien II | (B/S)₂ | kg | | 42,0 | 42,0 | 42,0 | 42,0 | 42,0 | 18,0 | 18,0 |
| Styrol IV, | (BIS)₂ | kg | | 25,4 | 20,3 | 20,3 | 20,3 | 20,3 | 17,1 | 17,1 |
| Butadien III | (B/S)₃ | kg | | | | | | | 18,0 | 18,0 |
| Styrol V | (B/S)₃ or S_{c} | kg | | | 5,1 | 5,1 | 5,1 | 5,1 | 10,8 | 10,8 |
| Styrol VI | S_{c} | kg | | | | | | | 6,4 | 6,4 |
| Edenol B316 | | ml | | 531 | 531 | 531 | 531 | 551 | | |
| Diethylcarbonat | | ml | | | | | | | 128 | 128 |
| Struktur | | | II | Ib | IIb | IIb | IIb | IIb | III | III |

**Tabelle 4: Physikalische and mechanische Eigenschaften der sternförmigen Styrol-Butadien-Blockcopolymeren der Beispiele 2 bis 7 und Vergleichsversuche V3 und V4**

| Beispiel | Vicat B [°C] | Shorehärte D [°C] | E-Modul [MPa] | Streckspannung [MPa] | Reißdehnung [%] |
|---|---|---|---|---|---|
| V3 | 36,2 | 57 | 255 | 12,5 | 368 |
| V4 | 31,6 | 53 | 208 | 9,2 | 360 |
| 2 | 31,8 | 55 | 343 | 10,7 | 360 |
| 3 | 35,6 | 57 | 231 | 9,4 | 437 |
| 4 | 37,8 | 60 | 395 | 12,3 | 445 |
| 5 | 32,9 | 55 | 180 | 9,8 | 399 |
| 6 | 32,1 | 53 | 114 | 7,0 | 494 |
| 7 | 33,2 | 53 | 117 | 7,0 | 496 |

**Tabelle 5: Physikalische und mechanische Eigenschaften der Blends aus Blockcopolymeren der Beispiele 2 bis 7 mit GPPS**

| Beispiel | Blockcopolymer aus Beispiel | Vicat B [°C] | Shorehärte D [°C] | E-Modul [MPa] | Streckspannung [MPa] | Reißdehnung [%] |
|---|---|---|---|---|---|---|
| V5 | V3 | 76,3 | 75 | 1183 | 33,7 | 9,9 |
| V6 | V4 | 71,4 | 80 | 1236 | 34,2 | 11 |
| 8 | 2 | 63,7 | 79 | 1421 | 31,9 | 2,6 |
| 9 | 3 | 80,4 | 77 | 1169 | 28,5 | 49 |
| 10 | 4 | 86,9 | 77 | 1830 | 37,3 | 17 |
| 11 | 5 | 79,9 | 77 | 855 | 31,7 | 35 |
| 12 | 6 | 76,1 | 75 | 1467 | 27,6 | 49 |
| 13 | 7 | 78,7 | 74 | 1044 | 27,9 | 63 |

## Patentansprüche

1. Sternförmige Blockcopolymere, enthaltend mindestens zwei außenliegende Hartblöcke S₁ und S₂ aus vinylaromatischen Monomeren, mindestens einen statistischen Weichblock B/S aus vinylaromatischen Monomeren und Dienen und einen zusätzlichen inneren Hartblock S₃ aus vinylaromatischen Monomeren, **dadurch gekennzeichnet, dass** der Anteil der Hartblöcke über 40 Gew.-%, bezogen auf das gesamte Blockcopolymer, beträgt und das Molekulargewicht von S₃ im Bereich von 500 bis 5000 g/mol liegt.

2. Blockcopolymere nach Anspruch 1, **dadurch gekennzeichnet, dass** der 1,2-Vinylgehalt im Weichblock B/S unter 20 % beträgt.

3. Blockcopolymere nach Anspruch 1 oder 2, **dadurch gekennzeichnet, dass** die Blockcopolymeren keinen Homopolymerenblock B aus Dienen enthalten.

4. Blockcopolymere nach Anspruch 1, **dadurch gekennzeichnet, dass** das Molekulargewicht von S₁ im Bereich von 5000 bis 30000 g/mol liegt und das Molekulargewicht von S₂ größer als 35000 g/mol beträgt.

5. Blockcopolymere nach einem der Ansprüche 1 bis 4, **dadurch gekennzeichnet, dass** sich mindestens zwei statistische Weichblöcke (B/S)₁ und (B/S)₂ mit unterschiedlichen relativen Anteilen an vinylaromatischen Monomeren zwischen den Hartblöcken S₁ und S₂ befinden.

6. Blockcopolymere nach einem der Ansprüche 1 bis 4, **dadurch gekennzeichnet, dass** sie mindestens einen Sternast der Blockfolge S₁-(B/S)-S₃ und mindestens einen Sternast der Blockfolge S₂-(B/S)-S₃ besitzen.

7. Blockcopolymere nach einem der Ansprüche 1 bis 5, **dadurch gekennzeichnet, dass** sie mindestens einen Sternast der Blockfolge S₁-(B/S)₁-B/S)₂-S₃ und mindestens einen Sternast der Blockfolge S₂-(B/S)₁-(B/S)₂-S₃ besitzen und das molare Verhältnis von vinylaromatischem Monomer zu Dien S/B im Block (B/S)₁ im Bereich von 0,5 bis 2 und im Block (B/S)₂ unter 0,5 liegt.

8. Polymermischungen aus Blockcopolymeren nach einem der Ansprüche 1 bis 7 und weiteren Styrolpolymeren.

9. Verfahren zur Herstellung von Blockcopolymeren gemäß einem der Ansprüche 1 bis 7, **dadurch gekennzeichnet, dass** die Blockcopolymeren durch sequentielle anionische Polymerisation gebildet werden, wobei mindestens die Polymerisation des Weichblockes (B/S) in Gegenwart eines Kaliumsalzes erfolgt.

10. Verfahren zur Herstellung von Blockcopolymeren nach Anspruch 9, **dadurch gekennzeichnet, dass** das molare Verhältnis von anionischem Polymerisationsinitiator zu Kaliumsalz im Bereich von 10 : 1 bis 100 : 1 gewählt wird.

11. Verfahren zur Herstellung von Blockcopolymeren nach Anspruch 9 oder 10, **dadurch gekennzeichnet, dass** man als Kaliumsalz ein Kaliumalkoholat eines tertiären Alkohols mit mindestens 5 Kohlenstoffatomen einsetzt.

12. Verfahren zur Herstellung von Blockcopolymeren nach einem der Ansprüche 9 bis 11, **dadurch gekennzeichnet, dass** man als Kaliumsalz ein Kalium-2-methyl-butanolat, Kalium-2,2-dimethyl-1-propanolat, Kalium-2,3-dimethyl-3-pentanolat, Kalium-3,7-dimethyl-3-oktanolat oder Kalium-3-ethyl-3-pentanolat einsetzt.

13. Verfahren nach einem der Ansprüche 9 bis 12, **dadurch gekennzeichnet, dass** zweimal ein Initiator I₁, und I₂ gleichzeitig mit vinylaromatischen Monomeren zugegeben wird und das molare Initiatorverhältnis I₂/I₁ im Bereich von 4/1 bis 1/1 liegt.

## Claims

1. A star-shaped block copolymer comprising at least two external hard blocks S₁ and S₂ made from vinylaromatic monomers, at least one random soft block B/S made from vinylaromatic monomers and from dienes and an additional inner hard block S₃ made from vinylaromatic monomers, wherein the proportion of the hard blocks is above 40% by weight, based on the total block copolymer, and the molar mass of S₃ is from 500 to 5000 g/mol.

2. The block copolymer according to claim 1, wherein the 1,2-vinyl content in the soft block B/S is below 20%.

3. The block copolymer according to claim 1 or 2, in which there is no homopolymer block B made from dienes.

4. The block copolymer according to claim 1, wherein the molar mass of S₁ is from 5000 to 30 000 g/mol and the molar mass of S₂ is greater than 35 000 g/mol.

5. The block copolymer according to any one of claims 1 to 4, wherein there are at least two random soft blocks (B/S)₁ and (B/S)₂ having different relative proportions of vinylaromatic monomers between the hard blocks S₁ and S₂.

6. The block copolymer according to any one of claims 1 to 4, which has at least one arm of the star with the block sequence S₁-(B/S)-S₃ and at least one arm of the star with the block sequence S₂-(B/S)-S₃.

7. The block copolymer according to any one of claims 1 to 5 which has at least one arm of the star with the block sequence S₁-(B/S)₁-(B/S)₂-S₃ and at least one arm of the star with the block sequence S₂-(B/S)₁-(B/S)₂-S₃, and the molar ratio of vinylaromatic monomer to diene S/B in the block (B/S)₁ is from 0.5 to 2, and in the block (B/S)₂ is less than 0.5.

8. The polymer mixture made from block copolymers according to any one of claims 1 to 7 and from other styrene polymers.

9. The process for preparing block copolymers according to any one of claims 1 to 7, which comprises forming the block copolymers by sequential anionic polymerization, where at least the polymerization of the soft block (B/S) takes place in the presence of a potassium salt.

10. The process for preparing block copolymers according to claim 9, wherein the molar ratio selected of anionic polymerization initiator to potassium salt is from 10:1 to 100:1.

11. The process for preparing block copolymers according to claim 9 or 10, wherein the potassium salt used comprises a potassium alcoholate of a tertiary alcohol having at least 5 carbon atoms.

12. The process for preparing block copolymers according to any one of claims 9 to 11, wherein the potassium salt used comprises a potassium 2-methylbutanolate, potassium 2,2-dimethyl-1-propanolate, potassium 2,3-dimethyl-3-pentanolate, potassium 3,7-dimethyl-3-octanolate or potassium 3-ethyl-3-pentanolate.

13. The process according to any one of claims 9 to 12, where on two occasions an initiator I₁ and I₂ is added simultaneously with vinylaromatic monomers, and the molar I₂/I₁ initiator ratio is in the range from 4/1 to 1/1.

## Revendications

1. Copolymères blocs en forme d'étoile contenant à l' extérieur au moins deux blocs durs S₁ et S₂ à base de monomères vinyl-aromatiques, au moins un bloc mou statistique B/S à base de monomères vinyl-aromatiques et de diènes et avec un bloc mou interne additionnel S₃ à base de monomères vinyl-aromatiques, **caractérisés en ce que** la fraction des blocs durs est supérieure à 40 % en poids par rapport au copolymère bloc global et le poids moléculaire de S₁ est de l'ordre de 500 à 5 000 g/mol.

2. Copolymères blocs suivant la revendication 1, **caractérisés en ce que** la teneur en 1,2-vinyle dans le bloc mou B/S est inférieure à 20 %.

3. Copolymères blocs suivant la revendication 1 ou 2, **caractérisés en ce que** les copolymères blocs ne contiennent pas de bloc homopolymère B à base de diènes.

4. Copolymères blocs suivant la revendication 1, **caractérisés en ce que** le poids moléculaire de S₁ est de l'ordre de 5 000 à 30 000 g/mol et le poids moléculaire de S₂ est supérieur à 35 000 g/mol.

5. Copolymères blocs suivant l'une des revendications 1 à 4, **caractérisés en ce qu'**au moins deux blocs mous statistiques (B/S)₁ et (B/S)₂ ayant des fractions relatives différentes en monomères vinyl-aromatiques se trouvent entre les blocs durs S₁ et S₂.

6. Copolymères blocs suivant l'une des revendications 1 à 4, **caractérisés en ce que** les copolymères blocs possèdent au moins une branche d'étoile ayant la succession de blocs S₁- (B/S) -S₃ et au moins une branche d'étoile ayant la succession de blocs S₂- (B/S) -S₃.

7. Copolymères blocs suivant l'une des revendications 1 à 5, **caractérisés en ce que** les copolymères blocs possèdent au moins une branche d'étoile ayant la succession de blocs S₁-(B/S)₁-(B/S)₂-S₃ et au moins une branche d'étoile ayant la succession de blocs S₂-(B/S)₁-(B/S)₂-S₃, et le rapport molaire entre monomère vinyl-aromatique et diène S/B dans le bloc (B/S)₁ est de l'ordre de 0,5 à 2 et dans le bloc (B/S)₂ est inférieur à 0,5.

8. Mélanges polymères de copolymères blocs suivant l'une des revendications 1 à 7 et d'autres polymères de styrène.

9. Procédé de préparation de copolymères blocs suivant l'une des revendications 1 à 7, **caractérisé en ce que** les copolymères blocs sont formés par une polymérisation anionique séquentielle, au moins la polymérisation du bloc mou (B/S) ayant lieu en présence d'un sel de potassium.

10. Procédé de préparation de copolymères blocs suivant la revendication 9, **caractérisé en ce que** le rapport molaire entre l'amorceur de polymérisation anionique et le sel de potassium est choisi dans la gamme de 10/1 à 100/1.

11. Procédé de préparation de copolymères blocs suivant la revendication 9 ou 10, **caractérisé en ce que**, comme sel de potassium, on met en oeuvre un alcoolate de potassium d'un alcool tertiaire comportant au moins 5 atomes de carbone.

12. Procédé de préparation de copolymères blocs suivant l'une des revendications 9 à 11, **caractérisé en ce que**, comme sel de potassium, on met en oeuvre du 2-méthyl-butanolate de potassium, du 2,2-diméthyl-1-propanolate de potassium, du 2,3-diméthyl-3-pentanolate de potassium, du 3,7-diméthyl-3-octanolate de potassium ou du 3-éthyl-3-pentanolate de potassium.

13. Procédé suivant l'une des revendications 9 à 12, dans lequel à deux reprises un amorceur I₁ et I₂ est ajouté en même temps à des monomères vinyl-aromatiques et le rapport molaire amorceur I₂/I₁ est de l'ordre de 4/1, à 1/1.
